# EUROPÄISCHE PATENTSCHRIFT

(11) **EP 3 066 533 B1**
(45) Veröffentlichungstag und Bekanntmachung des Hinweises auf die Patenterteilung: **26.04.2017**
(21) Anmeldenummer: 14799965.0
(22) Anmeldetag: 07.11.2014
(51) Int. Cl.: G05B 19/416

(54) **VERFAHREN ZUR BEARBEITUNG EINES ROHTEILS MITTELS EINES WERKZEUGES**
METHOD FOR MACHINING A BLANK BY MEANS OF A TOOL
PROCÉDÉ D'USINAGE D'UNE PIÈCE BRUTE AU MOYEN D'UN OUTIL

(30) Priorität: 07.11.2013 DE 102013112232
(43) Veröffentlichungstag der Anmeldung: 14.09.2016
(73) Patentinhaber: OPEN MIND Technologies AG, 82234 Wessling (DE)
(72) Erfinder: BRAMBS, Peter, 80803 München (DE); KOCH, Josef, 81371 München (DE)
(74) Vertreter: Grape & Schwarzensteiner
(86) Internationale Anmeldenummer: PCT/EP2014/002985
(87) Internationale Veröffentlichungsnummer: WO 2015/067370

(56) Entgegenhaltungen:
- EP-A1- 1 755 010
- EP-A2- 2 022 608
- DE-A1- 10 027 526
- DE-A1- 10 144 508
- DE-T2- 69 624 093

## Beschreibung

Die Erfindung betrifft ein Verfahren zur Bearbeitung eines Rohteils mittels eines Werkzeuges zur Herstellung eines Fertigteils.

Bei der Bearbeitung eines Rohteils mittels eines Werkzeuges zur Herstellung eines Fertigteils wird das Werkzeug auf vordefinierten Führungsbahnen bzw. Bahnen geführt, die softwaregestützt berechnet werden können. Eine einzelne Führungsbahn bzw. Bahn besteht aus beliebig vielen aufeinanderfolgenden Bahnsegmenten bzw. Bahnabschnitten.

Bei den Bahnsegmenten handelt es sich um Bearbeitungssegmente und Verbindungssegmente. Im Verlauf eines Bearbeitungssegmentes befindet sich das Werkzeug in Eingriff mit dem Material des Rohteils und trägt dieses ab. Ein Verbindungssegment führt vom Endpunkt eines Bearbeitungssegmentes zum Startpunkt eines darauffolgenden Bearbeitungssegmentes. Im Verlauf eines Verbindungssegmentes befindet sich das Werkzeug in aller Regel außer Eingriff mit dem Material des Rohteils. Dies kann mit einem vorherigen Rückzug des Werkzeuges in eine gewisse Sicherheitshöhe über dem Rohteil bzw. Werkstück erfolgen. In diesem Fall wird üblicherweise ein erhöhter Vorschub, häufig auch der Eilgang, verwendet. Im Verlauf eines Verbindungssegmentes kann sich das Werkzeug jedoch auch in Eingriff mit dem Material des Rohteils befinden und dieses abtragen. Die Verbindungsbewegung erfolgt dann auf direktem Wege innerhalb des Bearbeitungsbereichs zwischen zwei aufeinanderfolgenden Bearbeitungssegmenten, etwa bei einer mehrzeiligen Bearbeitung.

Grundsätzlich ist es von Vorteil, möglichst effiziente Verbindungsbewegungen auszuführen, um die Gesamtdauer der Bearbeitung zu reduzieren. Dies ist besonders bedeutsam bei Maschinen, die im Produktionsbetrieb zur Serienfertigung eingesetzt werden. Ebenso wichtig wie die Effizienz ist jedoch eine Reduktion der Maschinenbelastung und die Berücksichtigung ihres Beschleunigungsvermögens. Dieser Faktor ist besonders relevant im Bereich der Hochgeschwindigkeitsbearbeitung, bei der mit extrem hohen Vorschüben und Beschleunigungen verfahren wird. Zur genaueren Klärung der Hintergründe werden im Folgenden die wichtigsten technischen Aspekte von Werkzeugmaschinen näher erläutert.

Werkzeugmaschinen für die Fräsbearbeitung unterscheiden sich auf vielfältige Art im Aufbau und in der Arbeitsweise. Eine erste Unterteilung betrifft die Anzahl der steuerbaren Linear-und Drehachsen. Bei dreiachsig arbeitenden Maschinen können die drei Linearachsen (X, Y und Z) gesteuert werden, nicht aber die Drehachsen (A/B und C). Folglich ist das Werkzeug immer senkrecht zum Maschinentisch, also parallel zur z-Achse des kartesischen Maschinen-Koordinatensystems, ausgerichtet. Vierachsige Maschinen ermöglichen zusätzlich eine Steuerung einer Drehachse (A/B), um das Werkzeug in einem Winkel zur z-Achse des Maschinen-Koordinatensystems anzustellen. Am leistungsfähigsten sind die fünfachsigen Werkzeugmaschinen, mit denen sich auch noch die zweite Drehachse (C) ansprechen lässt, insbesondere Solche, die eine simultane Steuerung der somit insgesamt fünf verfügbaren Achsen erlauben. Eine simultane Steuerung ermöglicht die größtmögliche Freiheit bei der Führung des Werkzeuges. Die für 5-Achs-Maschinen zu berechnenden Werkzeugbahnen müssen dafür allerdings für jeden Anfahrtspunkt neben den Positionsangaben auch Informationen zu den einzustellenden Winkeln der beiden Drehachsen enthalten.

Ein weiteres Unterscheidungsmerkmal bei fünfachsig arbeitenden Werkzeugmaschinen ist die Kinematik, d.h. die technische Umsetzung der Drehachsensteuerung. So kann für eine Drehachse ein gegebener Winkel durch ein Schwenken des Fräskopfs oder alternativ ein (dazu inverses) Schwenken des Maschinentischs eingestellt werden. Hier gibt es je nach Hersteller alle denkbaren Varianten: Kopf-Kopf-Kinematiken (beide Drehachsen werden über den Fräskopf gesteuert), Tisch-Tisch-Kinematiken (beide Drehachsen werden über den Maschinentisch gesteuert) und gemischte Kinematiken. In diesem Zusammenhang ist insbesondere die sogenannte Dynamik der Maschine von Bedeutung. Diese beschreibt das Beschleunigungsvermögen der Linear- und Drehachsen. Hierbei gibt es, bedingt durch die Kinematik und die eingesetzte Antriebstechnologie, große Unterschiede zwischen den Maschinen. Aber auch innerhalb einer Maschine, d.h. zwischen den einzelnen Achsen, kann die Dynamik variieren. So weist beispielsweise die z-Linearachse oft ein anderes Beschleunigungsvermögen als die x- und y-Linearachsen auf. Man spricht in diesem Fall von einer anisotropen Achsenbeschleunigung.

Die Maschinen zur Hochgeschwindigkeitsbearbeitung (High Speed Cutting) stellen aufgrund der speziellen Anforderungen eine noch andere Kategorie dar. Sie sind durch besonders große Spindeldrehzahlen und eine hohe Dynamik, d.h. sehr große Vorschübe und Achsenbeschleunigungen, gekennzeichnet. Dadurch werden maschinenbelastende Effekte einer ungeeigneten Bewegungsführung noch weiter verstärkt.

Bei bekannten Verfahren zur Bearbeitung eines Rohteils 110 mittels eines Werkzeuges 112 zur Herstellung eines Fertigteils entsprechend Oberbegriff des Anspruchs 1, wie beispielsweise in der DE 696 24 093 T2 beschrieben und/oder in den Fig. 7a bis 7c dargestellt sind, wird das Werkzeug 112 auf einer Führungsbahn 114 mit wenigstens drei aufeinanderfolgenden Bahnsegmenten 116, 118, 120 in Form von zwei Bearbeitungssegmenten 116, 120 und einem Verbindungssegment 118, welches die zwei Bearbeitungssegmente 116, 120 miteinander verbindet, bewegt. Das Werkzeug 112 kann beispielsweise als Fräswerkzeug bzw. Fräser, Bohrwerkzeug bzw. Bohrer oder Laserkopf ausgebildet sein.

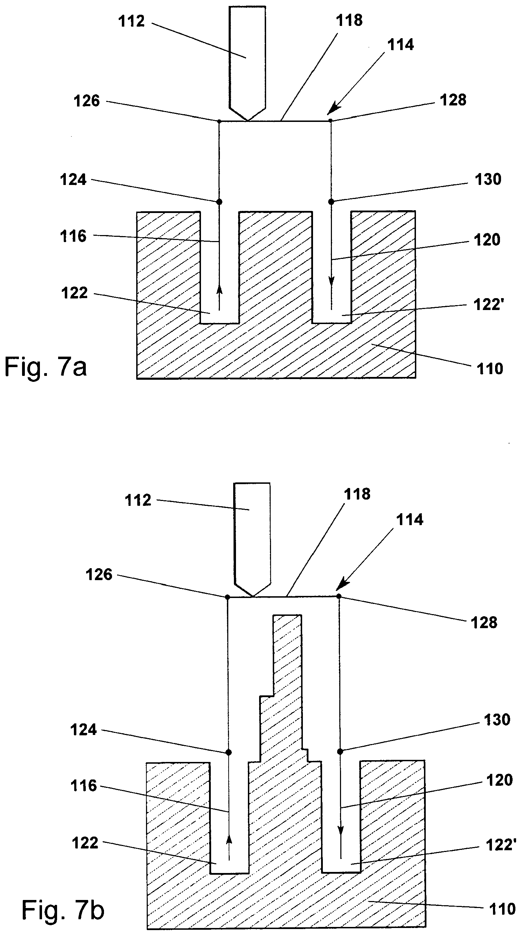

Die Fig. 7a bis 7c zeigen verschiedene Anwendungsbeispiele zur Bearbeitung von Bohrungen 122, 122'.

Das Verbindungssegment 118 weist im einfachsten Fall eine lineare Form entsprechend der Fig. 7a auf. Die Verbindungsbewegung des Werkzeuges 112 erfolgt unter vertikalem Rückzug auf einen Sicherheitsabstand über dem Rohteil 110. Das Werkzeug 112 wird dabei zunächst mit dem erhöhten Vorschub von einem Endpunkt 124 des ersten Bearbeitungssegmentes 116, der zugleich den Startpunkt des Verbindungssegmentes 118 bildet, bis in Höhe des Sicherheitsabstands zu einem ersten Zielpunkt 126 nach oben senkrecht abgehoben. Anschließend erfolgt in dieser Höhe eine horizontale geradenförmige Verbindungsbewegung zu einem zweiten Zielpunkt 128. Von dem zweiten Zielpunkt 128 wird das Werkzeug 112 auf einen Startpunkt 130 des zweiten Bearbeitungssegmentes 120, der zugleich den Endpunkt 130 des Verbindungssegmentes 118 bildet, geführt bzw. nach unten senkrecht abgesetzt.

Wie aus der Fig. 7b ersichtlich ist, weist das Verbindungssegment 118 ebenfalls eine lineare Form auf. Um eine Kollision zwischen Rohteil 110 und Werkzeug 112 bei einem Hindernis während der Verbindungsbewegung des Werkzeuges 112 zu verhindern, ist die Sicherheitshöhe jedoch vergrößert.

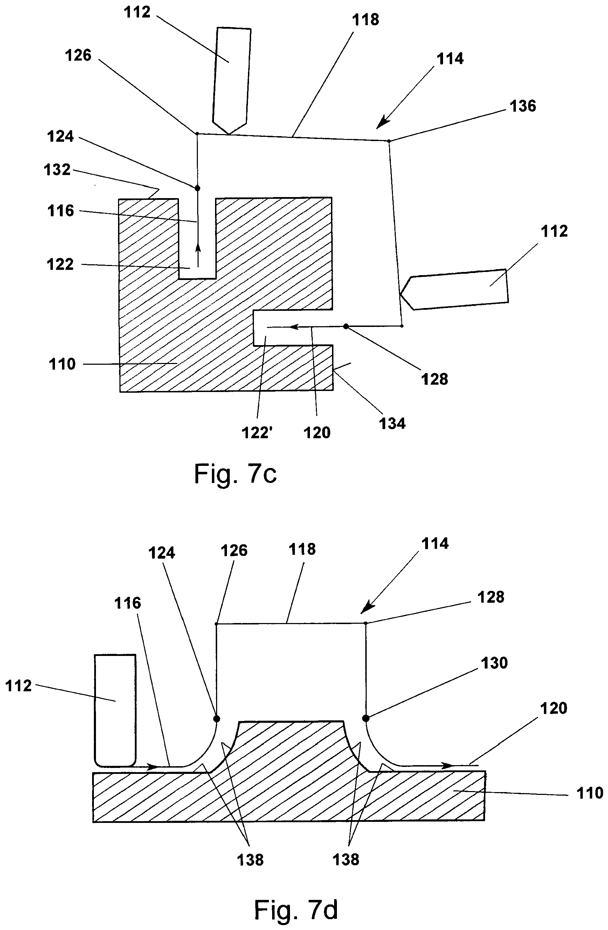

Eine ähnliche Situation liegt häufig bei einer 5-achsigen Bearbeitung vor, wenn das Werkzeug 112 von einer zu bearbeitenden Seite 132 des Rohteils 110 zur nächsten zu bearbeitenden Seite 134 geführt werden muss. In diesem Fall muss der kritische Bereich unter Berücksichtigung des Sicherheitsabstandes umfahren werden, im einfachsten Fall mit einer Folge von Geraden über einen Zielpunkt 136, so dass die resultierende Verbindungsbewegung des Werkzeuges 112 dann eine polygonale Form entsprechend der Fig. 7c besitzt.

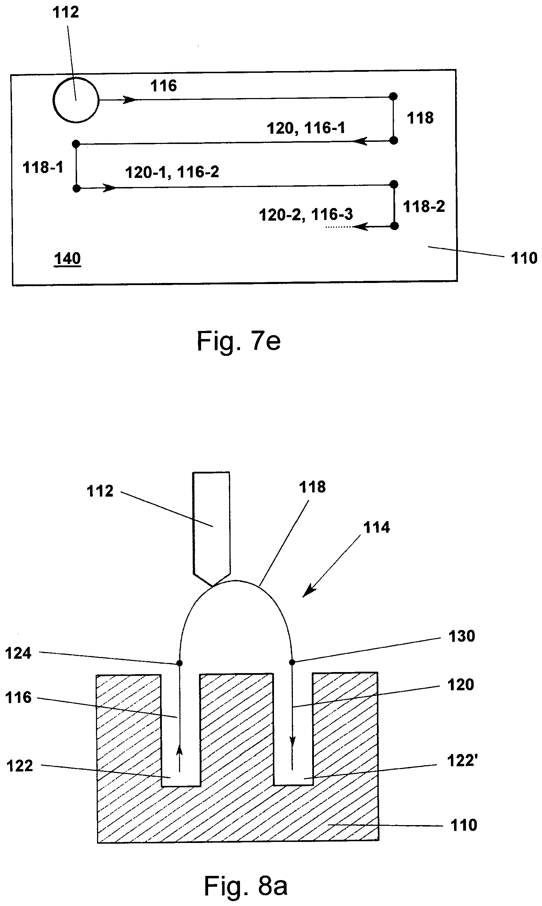

Weiterhin sind in den Fig. 7d und 7e verschiedene Anwendungsbeispiele zur Bearbeitung von Flächen 138 des Rohteils 110 dargestellt.

Entsprechend der Fig. 7d kann die Verbindungsbewegung des Werkzeuges 112 in Form zum Beispiel eines Fräswerkzeuges bzw. Fräsers zwischen den zwei Bearbeitungssegmenten 116, 120 zur Flächenbearbeitung von Flächen 138 über das Verbindungssegment 118 erfolgen.

Darüber hinaus sind Verbindungsbewegungen des Werkzeuges 112 in Form zum Beispiel eines Fräswerkzeuges bzw. Fräsers, wie etwa die Fig. 7e zeigt, zur Flächenbearbeitung auch direkt innerhalb eines lokalen Bearbeitungsbereiches 140 ohne vertikalen Rückzug und somit gegebenenfalls unter Materialeingriff möglich. Beispielhaft sind einfache geradenförmige Verbindungsbewegungen auf dem Verbindungssegment 118, 118-1, 118-2 usw. zwischen den Bearbeitungssegmenten 116, 120, 116-1, 120-1, 116-2, 120-2, 116-3, usw. einer mehrzeiligen Zickzackbahn mit alternierender Bearbeitungsrichtung vorgesehen.

Bei diesen sämtlichen Verfahren haben sich die abrupten Richtungsänderungen am Anfang und Ende der horizontalen geradenförmigen Verbindungsbewegungen, also nach dem vertikalen Rückzug bzw. vor dem vertikalen Absetzen bzw. an den Zielpunkten 126, 128, 136, der bislang beschriebenen, linear bzw. polygonal ausgeformten Verbindungssegmente 118 als ausgesprochen nachteilig erwiesen. So stellen abrupte Richtungsänderungen eine erhebliche Belastung der Maschine, insbesondere bei hohen Vorschubgeschwindigkeiten, dar.

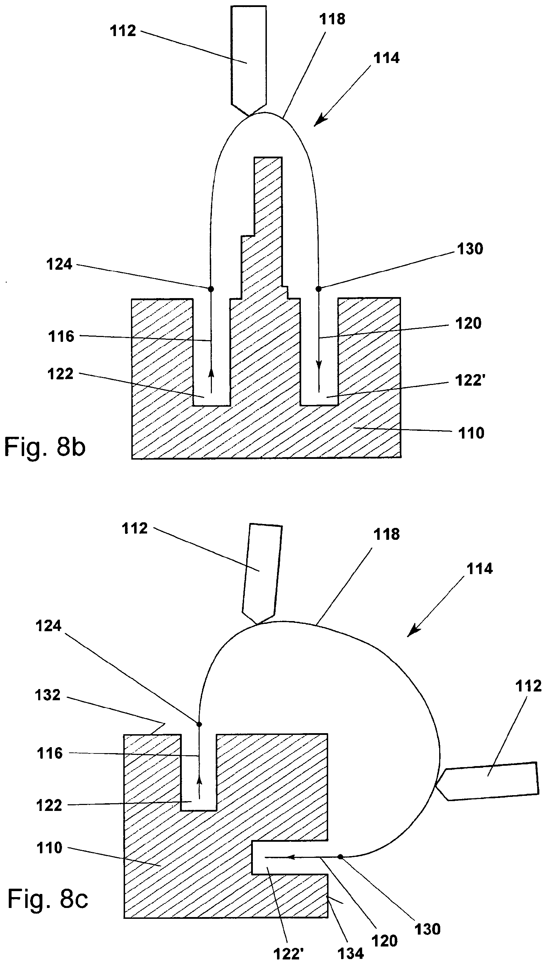

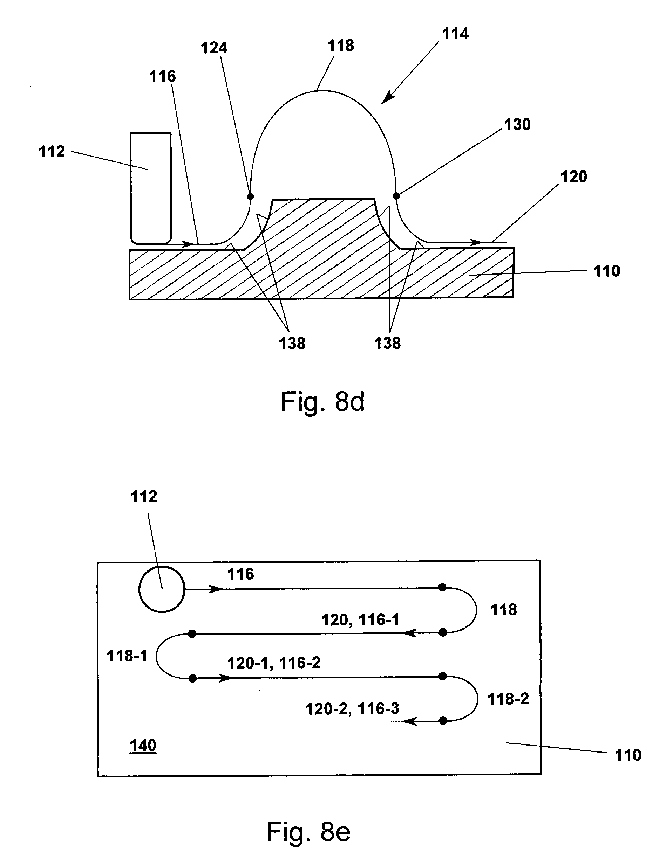

Zur Verbesserung dessen, insbesondere zur maschinenschonenderen Bewegung des Werkzeuges 112, schlagen weiterhin bekannte Verfahren daher eine Verwendung kurvenförmiger Verbindungssegmente 118 vor, wie zum Beispiel in den Fig. 8a bis 8c anhand einer Bohrungsbearbeitung und in den Fig. 8d und 8e anhand einer Flächenbearbeitung veranschaulicht ist.

Dabei kommen bei den Ausführungsformen der Fig. 8a bis 8e, welche denjenigen der Fig. 7a bis 7e entsprechen, Kurven zum Einsatz, die einen glatten, d.h. tangentenstetigen, Verlauf der Verbindungsbewegungen des Werkzeuges 112 ermöglichen. Der Übergang zwischen dem Verbindungssegment 118 und dem vorausgehenden bzw. dem nachfolgenden Bearbeitungssegment 116, 120 erfolgt dabei (zumeist auch) tangentenstetig.

Wie aus der Fig. 8c hervorgeht, sind kurvenförmige Verbindungssegmente 118 bei einer mehrseitigen Bearbeitung des Rohteils 110 von einer Seite 132 zur anderen Seite 134 ebenfalls möglich, wenn der zu umfahrende Bereich bei der Berechnung des Verbindungssegmentes 118 bzw. der Kurve berücksichtigt wird.

Auch innerhalb lokaler Bearbeitungsbereiche 140 können kurvenförmige Verbindungssegmente 118 zum Einsatz kommen, wie aus der Fig. 8e ersichtlich ist.

Auch diese Verfahren haben sich in der Praxis allerdings sämtlich als nachteilig erwiesen. So erfolgt die Berechnung der Verbindungssegmente 118 bzw. Verbindungskurven auf rein geometrischer Basis. Die Form eines Verbindungssegmentes bzw. einer Kurve ist dabei ausschließlich von den Positionen der zu verbindenden Punkte und gegebenenfalls den dort anliegenden Tangenten abhängig. Eine Berechnung der Verbindungssegmente 118 bzw. Verbindungskurven auf nicht-geometrischer Basis findet demgegenüber nicht statt. Insbesondere werden Vorschubverhältnisse nicht berücksichtigt. Dies ist im Sinne eines schonenden und effizienten Verfahrens, das auch das Beschleunigungsvermögen der Maschine berücksichtigt, von ausgesprochenem Nachteil. Zudem weisen die berechneten Verbindungssegmente 118 bzw. Verbindungskurven im Allgemeinen eine größere Länge auf, als es angesichts gegebener Vorschubverhältnisse eigentlich notwendig wäre. Darüber hinaus lassen diese Verfahren allenthalben die spezifische Dynamik einer Maschine und ein möglicherweise anisotropes Achsenbeschleunigungsprofil einer Maschine unberücksichtigt.

Der vorliegenden Erfindung liegt nun die Aufgabe zugrunde, ein Verfahren zur Bearbeitung eines Rohteils mittels eines Werkzeuges zur Herstellung eines Fertigteils zur Verfügung zu stellen, mit welchem sich die obigen Nachteile verhindern lassen, welches mithin einen besonders schonenden und effizienten Einsatz für eine mit Werkzeugen betreibbare Maschine möglich macht, mit welchem sich eine erhebliche Zeitersparnis bei der Bearbeitung gegenüber herkömmlich eingesetzten Verfahren erreichen lässt und welches eine Berücksichtigung maschinenspezifischer Charakteristiken und Betriebscharakteristiken einer Maschine ermöglicht sowie damit einhergehend zu einer erheblichen Reduzierung von Betriebs- und Fertigungskosten insgesamt führt.

Diese Aufgabe wird auf überraschend einfache Weise durch die Merkmale des Anspruchs 1 gelöst.

Durch die Ausgestaltung des erfindungsgemäßen Verfahrens zur Bearbeitung eines Rohteils mittels eines Werkzeuges zur Herstellung eines Fertigteils, wobei das Werkzeug während der Bearbeitung auf einer Führungsbahn mit wenigstens drei aufeinanderfolgenden Bahnsegmenten in Form von zwei Bearbeitungssegmenten und einem die zwei Bearbeitungssegmente miteinander verbindenden Verbindungssegment bewegt wird und wobei das die zwei Bearbeitungssegmente miteinander verbindende Verbindungssegment der Bahnsegmente in dessen Form durch den Vorschub des Werkzeuges am Ende bzw. am Endpunkt des ersten Bearbeitungssegmentes und den Vorschub des Werkzeuges am Anfang bzw. am Startpunkt des zweiten Bearbeitungssegmentes bestimmt wird, wobei das die zwei Bearbeitungssegmente miteinander verbindende Verbindungssegment der Bahnsegmente in Richtung des größeren Vorschubs am Ende oder am Anfang der zwei Bearbeitungssegmente deformiert wird, werden die gegebenen Vorschubgeschwindigkeiten von zwei aufeinanderfolgenden Bearbeitungssegmenten in die Konstruktion des die zwei Bearbeitungssegmentes verbindenden Verbindungssegmentes miteinbezogen. Im Rahmen des erfindungsgemäßen Verfahrens können zudem unter anderem spezifische Dynamikeigenschaften der eingesetzten Maschine berücksichtigt werden, so dass die berechnete Form des Verbindungssegmentes optimal auf das gegebene Beschleunigungsprofil abgestimmt ist, wodurch wiederum eine ausgesprochen schonende und effiziente Bearbeitung unterstützt wird. Dadurch, dass das die zwei Bearbeitungssegmente miteinander verbindende Verbindungssegment der Bahnsegmente in Richtung des größeren Vorschubs am Ende oder am Anfang der zwei Bearbeitungssegmente deformiert wird, wird im Hinblick auf eine besonders maschinenschonende Bewegung des Werkzeuges ein steil(er) Verlauf des Verbindungssegmentes mit geringer Krümmung, dort wo ein hoher Vorschub vorliegt, und ein flach(er) Verlauf, dort wo der Vorschub niedriger ist, erzeugt.

Mit anderen Worten lässt sich ein ausgesprochen schonender und effizienter Einsatz für eine mit Werkzeugen betreibbare Maschine erreichen. Dies vor allem deshalb, weil die vorschubabhängige Berechnung des Verbindungssegmentes dem Verhalten einer solchen Maschine entgegenkommt. Darüber hinaus lässt sich mit dem erfindungsgemäßen Verfahren eine erhebliche Zeitersparnis bei der Bearbeitung gegenüber herkömmlich eingesetzten Verfahren erzielen. So werden die Verbindungssegmente in Form, Verlauf und nicht zuletzt hieraus resultierend auch hinsichtlich der Länge an bzw. auf die gegebenen Vorschübe individuell angepasst bzw. abgestimmt. Weiterhin ermöglicht das erfindungsgemäße Verfahren, maschinenspezifische Charakteristiken und Betriebscharakteristiken einer Maschine, wie zum Beispiel die spezifische Dynamik einer Maschine, ein anisotropes Achsenbeschleunigungsprofil einer Maschine etc., zu berücksichtigen. Schließlich trägt das erfindungsgemäße Verfahren zu einer erheblichen Reduzierung von Betriebs- und Fertigungskosten insgesamt bei. Nur beispielhaft lassen sich durch die Schonung bzw. Entlastung einer Maschine deren Stand- und Einsatzzeiten wesentlich erhöhen.

Weitere besonders vorteilhafte Einzelheiten des erfindungsgemäßen Verfahrens sind in den Ansprüchen 2 bis 12 beschrieben.

Von ganz besonderem Interesse sind die Maßnahmen des Anspruchs 2, wonach das die zwei Bearbeitungssegmente miteinander verbindende Verbindungssegment der Bahnsegmente entsprechend einem Verhältnis aus dem Vorschub des Werkzeuges am Ende des ersten Bearbeitungssegmentes zu dem Vorschub des Werkzeuges am Anfang des zweiten Bearbeitungssegmentes deformiert wird. Dieses Verhältnis bestimmt einen Betrag, um den die Verbindungskurve zum ersten Segment hin deformiert bzw. geneigt wird. Mit anderen Worten kann die Stärke einer solchen Deformation durch das Verhältnis der Vorschübe F1 und F2 zueinander bestimmt werden.

Nach Anspruch 3 ist in diesem Zusammenhang erfindungsgemäß vorgesehen, dass das die zwei Bearbeitungssegmente miteinander verbindende Verbindungssegment der Bahnsegmente bei einem Verhältnis des Vorschubs des Werkzeuges größer 1 zum ersten Bearbeitungssegment und bei einem Verhältnis des Vorschubs des Werkzeuges kleiner 1 zum zweiten Bearbeitungssegment hin deformiert wird.

Von besonderem Vorteil sind weiterhin die Merkmale des Anspruchs 4, wonach die Höhe oder Länge des Verbindungssegmentes der Bahnsegmente durch den Betrag des Vorschubs des Werkzeuges am Ende des ersten Bearbeitungssegmentes und/oder am Anfang des zweiten Bearbeitungssegmentes bestimmt wird.

Vorzugsweise wird das Verbindungssegment der Bahnsegmente entsprechend den Maßnahmen des Anspruchs 5 an ein jeweiliges anisotropes Beschleunigungsprofil einer das Werkzeug aufnehmenden Werkzeugmaschine angepasst.

Darüber hinaus liegt es im Rahmen der Erfindung, das Werkzeug nach Anspruch 6 während der Bearbeitung auf der Führungsbahn mit dem ersten Bearbeitungssegment und dem zweiten Bearbeitungssegment mit dem Material des Rohteils in Eingriff stehend zu bewegen.

Zusätzlich liegt es im Rahmen der Erfindung, das Werkzeug nach Anspruch 7 während der Bearbeitung auf der Führungsbahn mit dem Verbindungssegment zwischen dem ersten Bearbeitungssegment und dem zweiten Bearbeitungssegment mit dem Material des Rohteils außer Eingriff oder alternativ in Eingriff stehend zu bewegen.

In ganz vorteilhafter Weise wird das Werkzeug entsprechend den Merkmalen des Anspruchs 8 im Bereich des Verbindungssegmentes der Bahnsegmente auf der Führungsbahn mit einer gleichmäßigen und/oder einer vorschubabhängigen Interpolation der Werkzeugorientierung bewegt.

Weiterhin liegt es im Rahmen der Erfindung, das Werkzeug nach Anspruch 9 auf der Führungsbahn mit wenigstens zwei Bearbeitungssegmenten mit abwechselnd umkehrender Laufrichtung zu bewegen.

Von besonderem Vorteil sind die Maßnahmen des Anspruchs 10, wonach das Werkzeug auf einer Führungsbahn, die als tangentenstetige oder krümmungsstetige Kurve ausgebildet ist, bewegt wird.

Darüber hinaus wird das Werkzeug entsprechend den Merkmalen des Anspruchs 11 auf der Führungsbahn vorzugsweise kollisionsfrei bewegt.

Schließlich ist erfindungsgemäß noch vorgesehen, dass das Werkzeug nach Anspruch 12 als Fräswerkzeug, Bohrwerkzeug oder Laserkopf ausgebildet wird.

Weitere Merkmale, Vorteile und Einzelheiten der Erfindung ergeben sich aus der nachfolgenden Beschreibung von einigen bevorzugten Ausführungsformen der Erfindung sowie anhand der Zeichnungen. Hierbei zeigen:
- Fig. 1a: eine schematische Schnittansicht einer Ausführungsform eines erfindungsgemäßen Verfahrens zur Bohrungsbearbeitung eines Rohteils mittels eines Werkzeuges,
- Fig. 1b und 1c: schematische Schnittansichten weiterer Ausführungsformen eines erfindungsgemäßen Verfahrens zur Bohrungsbearbeitung eines Rohteils entsprechend der Fig. 1a,
- Fig. 1d: eine schematische Schnittansicht einer anderen Ausführungsform eines erfindungsgemäßen Verfahrens zur Flächenbearbeitung eines Rohteils entsprechend der Fig. 1a,
- Fig. le: eine schematische Draufsicht auf eine noch andere Ausführungsform eines erfindungsgemäßen Verfahrens zur Flächenbearbeitung in lokalen Bearbeitungsbereichen eines Rohteils,
- Fig. 2a und 2b: schematische Schnittansichten von weiteren Ausführungsformen eines erfindungsgemäßen Verfahrens zur Bearbeitung eines Rohteils entsprechend den Fig. 1a und 1d,
- Fig. 3: eine schematische perspektivische, teilweise abgebrochene Ansicht einer Ausführungsform eines erfindungsgemäßen Verfahrens zur Bohrungsbearbeitung eines Rohteils bei freier räumlicher Anordnung der Bearbeitungssegmente,
- Fig. 4a und 4b: eine schematische perspektivische Ansicht und eine Schnittansicht einer Ausführungsform eines erfindungsgemäßen Verfahrens zur Flächenbearbeitung in lokalen Bearbeitungsbereichen auf mehreren Seiten eines Rohteils,
- Fig. 5a: eine schematische Schnittansicht der Ausführungsform des erfindungsgemäßen Verfahrens zur Bearbeitung eines Rohteils entsprechend der Fig. 1a, unter Berücksichtigung eines gleich starken (isotropen) Achsenbeschleunigungsprofils,
- Fig. 5b: eine schematische Seitenansicht der Ausführungsform des erfindungsgemäßen Verfahrens zur Bearbeitung eines Rohteils entsprechend der Fig. 5a, unter Berücksichtigung eines unterschiedlich starken (anisotropen) Achsenbeschleunigungsprofils,
- Fig. 6a und 6b: schematische Schnittansichten von wiederum abgewandelten Ausführungsformen eines erfindungsgemäßen Verfahrens zur Bearbeitung eines Rohteils mit gleichmäßiger und vorschubabhängiger Interpolation der Werkzeugorientierung,
- Fig. 7a bis 7e: schematische Schnittansichten bzw. eine Draufsicht zur Veranschaulichung von bekannten Verfahren für eine Bearbeitung eines Rohteils, vergleichbar zu den Fig. 1a bis 1e, und
- Fig. 8a bis 8e: schematische Schnittansichten bzw. eine Draufsicht zur Veranschaulichung von weiteren bekannten Verfahren für eine Bearbeitung eines Rohteils, vergleichbar zu den Fig. 1a bis 1e.

Bei der nachfolgenden Beschreibung von verschiedenen Ausführungsformen eines erfindungsgemäßen Verfahrens zur Bearbeitung eines Rohteils 10 mittels eines Werkzeuges 12 zur Herstellung eines Fertigteils (nicht dargestellt) sind einander entsprechende, gleiche Bauteile jeweils mit identischen Bezugsziffern versehen. Die Art der Bearbeitung, die eine Bohrungsbearbeitung und/oder eine Flächenbearbeitung sein kann, ist für bzw. auf das erfindungsgemäße Verfahren ohne Einfluss. Das Werkzeug 12 kann ohne Einschränkung der Erfindung beispielsweise als Fräswerkzeug bzw. Fräser, Bohrwerkzeug bzw. Bohrer oder Laserkopf ausgebildet sein.

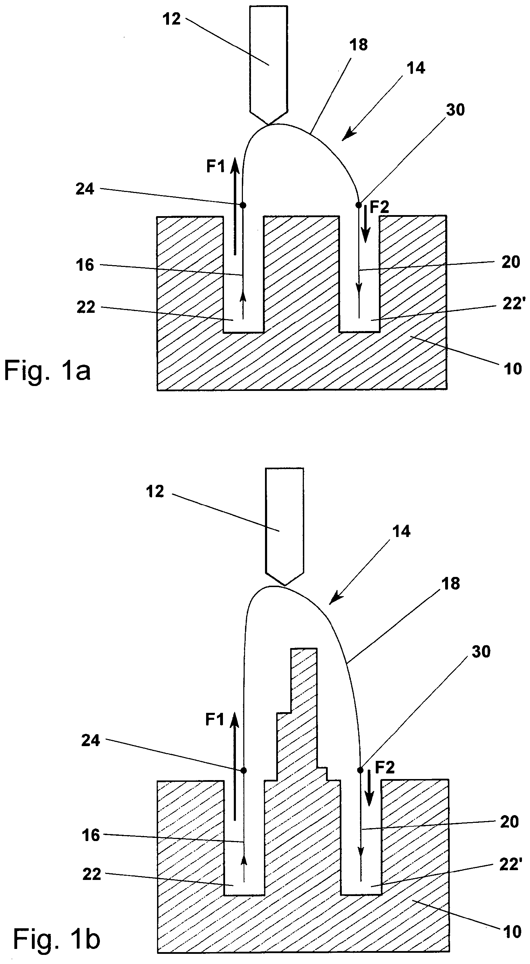

In der Fig. 1a ist eine erste Ausführungsform eines erfindungsgemäßen Verfahrens schematisch dargestellt, bei welchem das Werkzeug 12 während einer Bohrungsbearbeitung auf einer Führungsbahn 14 bewegt wird. Die Führungsbahn 14 umfasst wenigstens drei aufeinanderfolgende Bahnsegmente 16, 18, 20 in Form von zwei Bearbeitungssegmenten 16, 20 und einem die zwei Bearbeitungssegmente 16, 20 miteinander verbindenden Verbindungssegment 18.

Das Werkzeug 12 in Form eines Bohrwerkzeuges bzw. Bohrers oder ein Fräswerkzeuges bzw. Fräsers wird dabei aus dem ersten Bearbeitungssegment 16, d.h. der ersten Bohrung 22, mit einem Vorschub F1 herausgeführt und direkt entlang des Verbindungssegmentes 18 zum zweiten Bearbeitungssegment 20, d.h. zur zweiten Bohrung 22', geführt, um die Bearbeitung mit einem Vorschub F2 fortzusetzen.

Wie aus der Fig. 1a weiter ersichtlich ist, wird das Werkzeug 12 dabei auf der Führungsbahn 14 von dem ersten Bearbeitungssegment 16 über das Ende bzw. den Endpunkt 24 des ersten Bearbeitungssegmentes 16, der mit dem Anfang bzw. Startpunkt des Verbindungssegmentes 18 zusammenfällt, zu dem Verbindungssegment 18 bewegt. Von dem Verbindungssegment 18 wiederum wird das Werkzeug 12 über den Anfang bzw. Startpunkt 30 des zweiten Bearbeitungssegmentes 20, der mit dem Ende bzw. Endpunkt des Verbindungssegmentes 18 zusammenfällt, zu dem zweiten Bearbeitungssegment 20 bewegt.

Entsprechend der Fig. 1a findet auf dem Verbindungssegment 18 ein Rückzug des Werkzeuges 12 in eine Sicherheitshöhe statt. Dabei wird das die zwei Bearbeitungssegmente 16, 20 miteinander verbindende Verbindungssegment 18 der Bahnsegmente 16, 18, 20, insbesondere dessen Form bzw. Verlauf, durch den Vorschub F1 des Werkzeuges 12 am Ende 24 des ersten Bearbeitungssegmentes 16 und den Vorschub F2 des Werkzeuges 12 am Anfang 30 des zweiten Bearbeitungssegmentes 20 bestimmt.

Vorzugsweise wird in diesem Zusammenhang das Verbindungssegment 18 der Bahnsegmente 16, 18, 20, welches die zwei Bearbeitungssegmente 16, 20 miteinander verbindet, in Richtung des größeren Vorschubs F1, F2 am Ende 24 oder am Anfang 30 der zwei Bearbeitungssegmente 16, 20 deformiert.

Ohne hierauf im Einzelnen weiter einzugehen, sind der Vorschub F1 des Werkzeuges 12 am Ende 24 des ersten Bearbeitungssegmentes 16 und der Vorschub F2 des Werkzeuges 12 am Anfang 30 des zweiten Bearbeitungssegmentes 20 dabei voreingestellt. Damit ist festgelegt, ob der Vorschub F1, F2 am Ende 24 des ersten Bearbeitungssegmentes 16 oder am Anfang 30 des zweiten Bearbeitungssegmentes 20 größer ist bzw. ausfällt.

Eine solche Deformation des Verbindungssegmentes 18 lässt sich bevorzugt auch durch das Vorschubverhältnis F1/F2 bestimmen.

Das Verbindungssegment 18 der Bahnsegmente 16, 18, 20 wird demnach bei einem Verhältnis des Vorschubs F1/F2 des Werkzeuges 12 größer 1 zum ersten Bearbeitungssegment 16 und bei einem Verhältnis des Vorschubs F1/F2 des Werkzeuges 12 kleiner 1 zum zweiten Bearbeitungssegment 20 hin deformiert.

Bei sämtlichen in den Fig. 1a bis 6b dargestellten Ausführungsformen ist der Vorschub F1 größer als der Vorschub F2 gewählt, was durch die unterschiedliche Länge der Pfeile F1 und F2 angedeutet ist. Daraus resultiert nun erfindungsgemäß eine Deformation des Verbindungssegmentes 18 jeweils in Richtung des ersten Bearbeitungssegmentes 16. Der Betrag bzw. die Stärke einer solchen Deformation kann ganz bevorzugt beispielsweise durch ein Verhältnis der Vorschübe F1 und F2 zueinander bestimmt werden. Mathematisch kann eine solche Deformation dabei beispielsweise durch eine Verschiebung der Kontrollpunkte der Kurve in Splinedarstellung beschrieben werden. Die Tangentenstetigkeit am Übergang zwischen dem Bearbeitungssegment 16 und dem Verbindungssegment 18 in dem Endpunkt 24 bzw. Startpunkt und zwischen dem Verbindungssegment 18 und dem Bearbeitungssegment 20 in dem Endpunkt bzw. Startpunkt 30 bleibt von der Deformation unberührt.

Die Ausführungsform des erfindungsgemäßen Verfahrens der Fig. 1b, die ebenfalls eine Bohrbearbeitung darstellt, unterscheidet sich von derjenigen der Fig. 1a dadurch, dass zwischen den Bearbeitungssegmenten 16, 20 bzw. den zwei Bohrungen 22, 22' ein Hindernis liegt. Zur Kollisionsvermeidung ist bei der Ausführungsform des erfindungsgemäßen Verfahrens daher eine Vergrößerung der Sicherheitshöhe vorgesehen, was letztlich zu einem erheblich steileren Bahnverlauf führt.

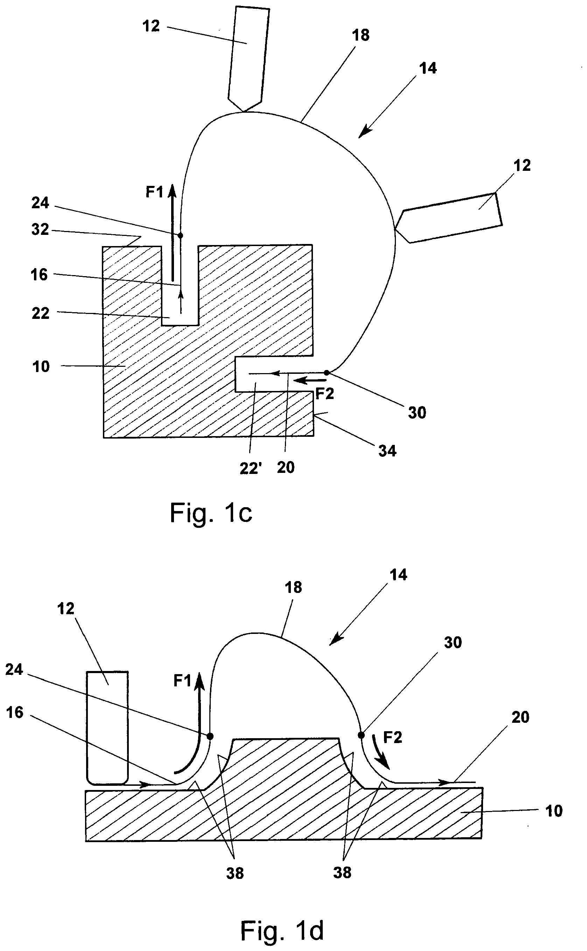

Bei der in der Fig. 1c gezeigten Ausführungsform des erfindungsgemäßen Verfahrens zur 5-achsigen Bohrungsbearbeitung ist ein Seitenwechsel des Werkzeuges 12 beispielsweise in Form eines Bohrwerkzeuges bzw. Bohrers oder Fräswerkzeuges bzw. Fräsers von einer Seite 32 des Rohteils 10 auf eine andere Seite 34 bei der mehrseitigen Bearbeitung vorgesehen. Entsprechend den Flächen der zwei Seiten 32, 34 verlaufen die zwei Bohrungen 22, 22' im Wesentlichen senkrecht zueinander. Ohne im Einzelnen dargestellt zu sein, ist es jedoch ebenso denkbar, dass die Bohrungen 22, 22' in gleicher Ebene zueinander schräg angeordnet sind. Hierbei wird analog zur Fig. 8c der zu umfahrende Bereich bei der Berechnung des Verbindungssegments 118 bzw. der Kurve berücksichtigt.

Die Ausführungsform des erfindungsgemäßen Verfahrens der Fig. 1d unterscheidet sich von denjenigen der Fig. 1a bis 1c durch eine Flächenbearbeitung von Flächen 38 des Rohteils 10. Dabei kann die Verbindungsbewegung des Werkzeuges 12, das zum Beispiel als Fräswerkzeug bzw. Fräser oder als Bohrwerkzeug bzw. Bohrer ausgebildet ist, aus einer oder in eine Bearbeitung der Flächen 38 aus- bzw. einmünden.

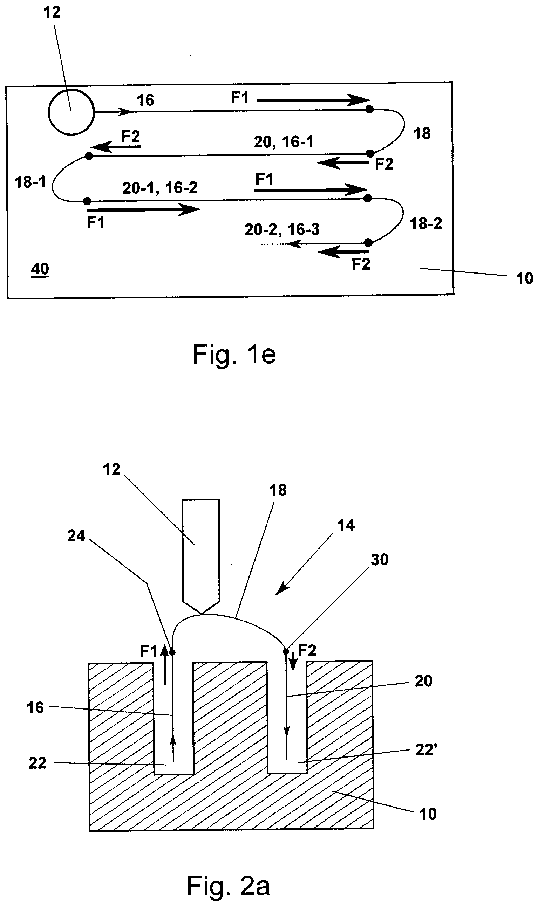

Bei der Ausführungsform der Fig. 1e ist das erfindungsgemäße Verfahren darüber hinaus auf eine Flächenbearbeitung mittels eines Werkzeuges 12 in Form von vorzugsweise einem Fräswerkzeug bzw. Fräser gerichtet. Dabei erfolgen Verbindungsbewegungen direkt innerhalb eines lokalen Bearbeitungsbereichs 40 ohne vertikalen Rückzug (und somit gegebenenfalls unter Materialeingriff), wie etwa zwischen den Bearbeitungs- und Verbindungssegmenten 16, 18, 20 einer mehrzeiligen Zickzackbahn mit alternierender Bearbeitungsrichtung bzw. mit abwechselnd umkehrender Laufrichtung. In der Praxis ergeben sich die beiden dargestellten unterschiedlich großen Vorschübe F1 und F2 der Bearbeitungssegmente 16, 20 dadurch, dass je nach Bearbeitungsrichtung abwechselnd Gleich- und Gegenlauffräsen erfolgt und beim Gegenlauffräsen zur Schonung des Werkzeuges 12 oftmals ein reduzierter Vorschub F2 verwendet wird.

Anschließend wiederholt sich der Vorgang entsprechend. Das zweite Bearbeitungssegment 20 wird mithin zu dem ersten Bearbeitungssegment 16-1 und wird durch ein weiteres, zweites Verbindungssegment 18-1 mit einem nachfolgenden Bearbeitungssegment 20-1 verbunden, das quasi das zweite Bearbeitungssegment 20-1 darstellt. Das zweite Bearbeitungssegment 20-1 wird sodann zu dem ersten Bearbeitungssegment 16-2 und wird durch ein weiteres, drittes Verbindungssegment 18-2 mit einem wieder nachfolgenden Bearbeitungssegment 20-2 verbunden, das quasi das zweite Bearbeitungssegment 20-2 darstellt. Das zweite Bearbeitungssegment 20-2 wird sodann zu dem ersten Bearbeitungssegment 16-3, usw.

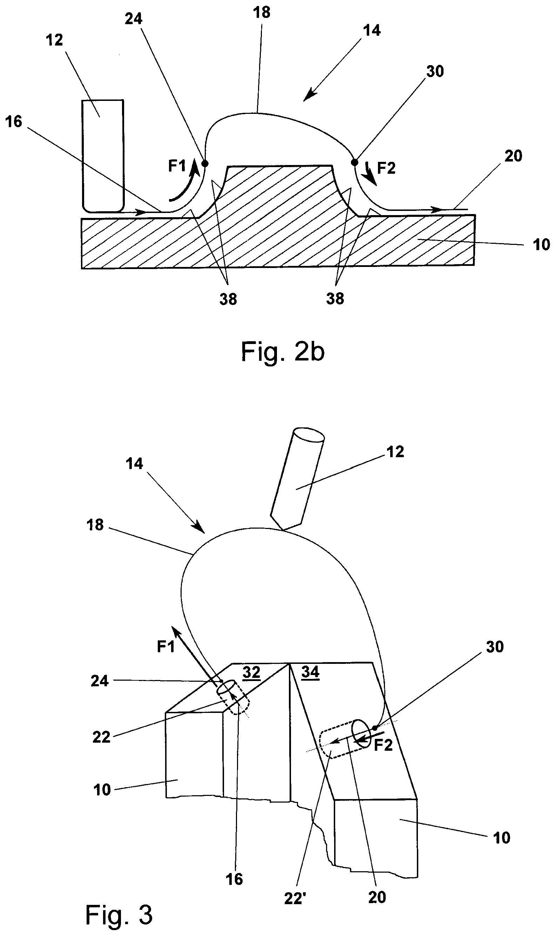

Der am Ende 24 des ersten Bearbeitungssegmentes 16 und/oder der am Anfang 30 des zweiten Bearbeitungssegmentes 20 vorliegende Vorschub F1 bzw. F2 ist/sind auch für die Höhe oder Länge des Verbindungssegmentes 18 bestimmend. Bei den Ausführungsbeispielen der Fig. 2a und 2b liegen gegenüber denjenigen der Fig. 1a und 1d halbierte Vorschübe F1 und F2 vor. Dementsprechend ist auch das Verbindungssegment 18 nur halb so hoch. Dies ist technologisch darin begründet, dass der geringere Vorschub F1 am Ende 24 des ersten Bearbeitungssegmentes 16 eine stärkere Krümmung und damit eine stärkere Richtungsänderung sowie einen flacheren Verlauf des Verbindungssegmentes 18 ermöglicht.

In der Fig. 3 ist eine weitere Ausführungsform des erfindungsgemäßen Verfahrens zur Bohrbearbeitung alternativ zu derjenigen nach den Fig. 1a bis 1e veranschaulicht. Demzufolge ist das erfindungsgemäße Verfahren nicht nur auf den zweidimensionalen Fall, in welchem die zwei Bearbeitungssegmente 16, 20 - und somit auch das Verbindungssegment 18 - in der gleichen Ebene liegen, beschränkt. Vielmehr ist das erfindungsgemäße Verfahren gleichermaßen auf den dreidimensionalen Fall, in welchem die zwei Bearbeitungssegmente 16, 20 und das Verbindungssegment 18 beliebig im Raum angeordnet sein können, anwendbar. Die Fig. 3 zeigt eine solche Ausführungsform beispielhaft anhand von zwei Rohteilen 10 mit zwei Bohrungen 22, 22' auf den Seiten 32, 34, deren Achsen zueinander windschief verlaufen. Das resultierende Verbindungssegment 18 zwischen den beiden Bearbeitungssegmenten 16, 20 erstreckt sich mithin quer durch den dreidimensionalen Raum.

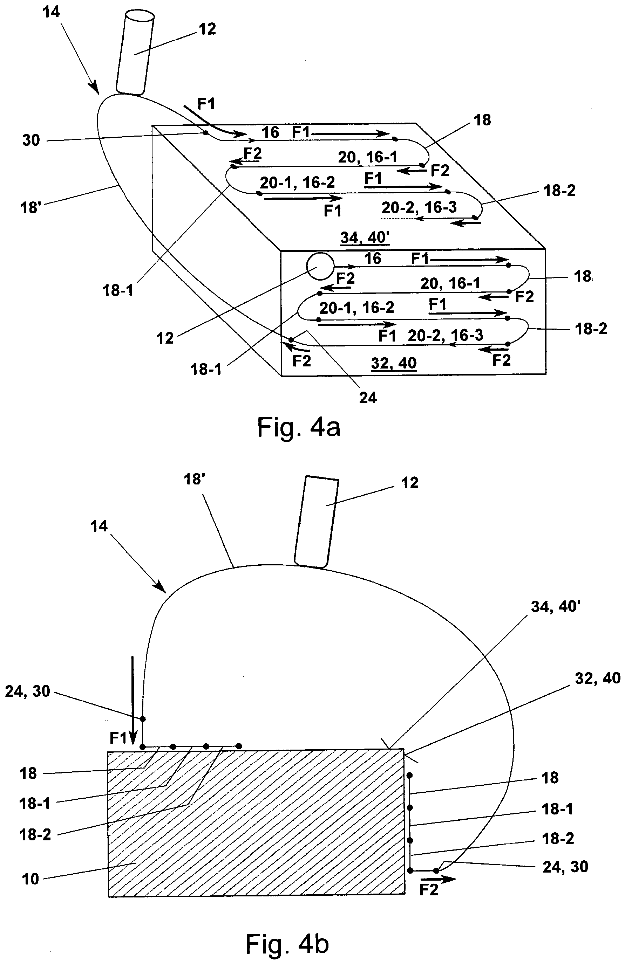

Beispielhaft geht aus den Fig. 4a und 4b eine noch andere Ausführungsform des erfindungsgemäßen Verfahrens, die wiederum eine Flächenbearbeitung mittels eines Werkzeuges 12, zum Beispiel eines Fräswerkzeuges bzw. Fräsers, zum Gegenstand hat, hervor. Dabei erfolgen Verbindungsbewegungen des Werkzeuges 12 in zwei (oder mehr) aufeinanderfolgenden lokalen Bearbeitungsbereichen 40, 40' auf einer oder - wie hier - verschiedenen Seiten 32, 34 eines Rohteils 10 bzw. Werkstückes. Die Verbindungssegmente 18, 18-1, 18-2 etc. innerhalb des jeweiligen lokalen Bearbeitungsbereiches 40, 40' entsprechen denjenigen des Ausführungsbeispiels der Fig. 1e. Der Vorschub F1 ist jeweils größer als der Vorschub F2 gewählt.

Der Wechsel des Werkzeuges 12 vom Endpunkt 24 des einen lokalen Bearbeitungsbereiches 40 auf der Seite 32 zum Startpunkt 30 des anderen lokalen Bearbeitungsbereiches 40' auf der anderen Seite 34 des Rohteils 10 erfolgt durch das Verbindungssegment 18'. Dessen Form wird entsprechend der Fig. 4a durch den Vorschub F2 am Endpunkt 24 des letzten Bearbeitungssegmentes 20-2 des einen lokalen Bearbeitungsbereiches 40 auf der ersten Seite 32 und den Vorschub F1 am Startpunkt 30 des ersten Bearbeitungssegmentes 16 des anderen lokalen Bearbeitungsbereiches 40' auf der nächsten Seite 34 bestimmt. Entsprechend den Fig. 4a und 4b ist der Vorschub F2 aufgrund der Flächenbearbeitung in dem lokalen Bereich 40 kleiner als der Vorschub F1.

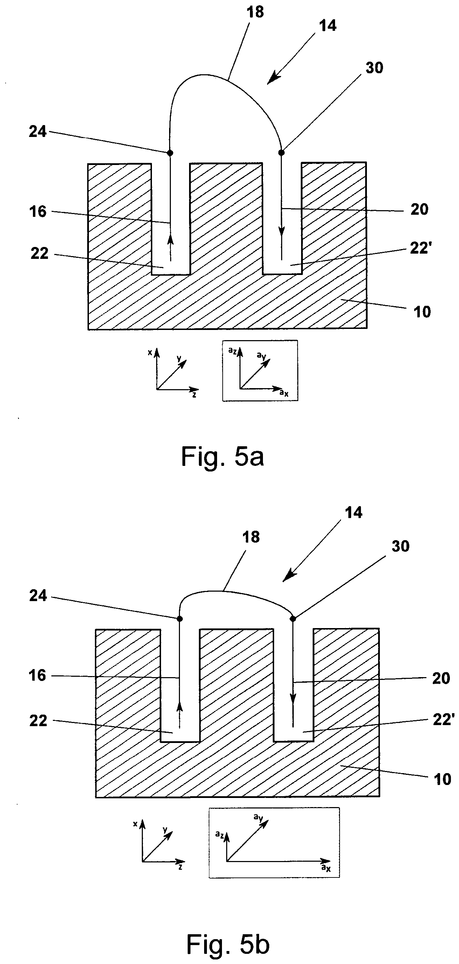

Zur Berücksichtigung der spezifischen Dynamik einer Werkzeugmaschine gibt es beim erfindungsgemäßen Verfahren weiter die Möglichkeit, ein anisotropes Achsenbeschleunigungsprofil in die Berechnung des/der Verbindungssegmente/s 18 mit einfließen zu lassen. Weist eine Maschinenachse ein großes Beschleunigungsvermögen auf, so sind in Richtung dieser Achse schnellere Vorschub- bzw. Richtungsänderungen des Werkzeuges 12 möglich. Beim erfindungsgemäßen Verfahren kann dies ausgenutzt werden, indem das Beschleunigungsvermögen der Achsen in die Bahnberechnung integriert wird, um so die Form der Verbindungskurven optimal an die Maschine anzupassen. Die Fig. 5a zeigt zunächst den Standardfall mit gleich starken (isotropen) Achsenbeschleunigungen und ein für diese Konfiguration nach dem erfindungsgemäßen Verfahren berechnetes Verbindungssegment 18, vergleichbar mit derjenigen der Fig. 1a.

Die Fig. 5b zeigt demgegenüber ein anisotropes Achsenbeschleunigungsprofil, bei dem etwa die maximale Beschleunigung a_{z} in Richtung der z-Achse weitaus kleiner als ax in Richtung der x-Achse ist (die Beschreibung lässt sich leicht auch auf andere Konstellationen übertragen, insbesondere solche, bei denen auch die y-Achse involviert ist). Das Verbindungssegment 18 wird nun abhängig von den maximalen Beschleunigungen zusätzlich deformiert. Diese Deformation erfolgt im Anschluss an die vorschubabhängige Kurvenberechnung bzw. Deformation, kann aber ohne im Einzelnen dargestellt zu sein, ebenso auch in diese integriert werden.

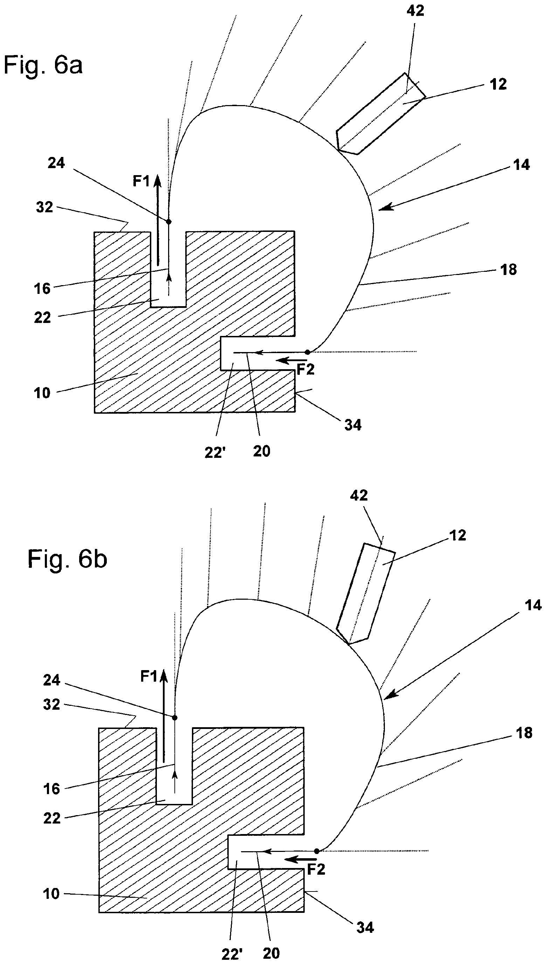

In einer noch anderen Ausgestaltung des erfindungsgemäßen Verfahrens zur Bohrungsbearbeitung entsprechend den Fig. 6a und 6b und/oder zur Flächenbearbeitung (nicht dargestellt) kann, jeweils zugehörig zu der jeweiligen Verbindungsbewegung des Werkzeuges 12, zusätzlich der Verlauf der Werkzeugorientierung bzw. die Einstellung der Drehachsen optimiert werden.

Im Allgemeinen ist die Orientierung des Werkzeuges 12, wie die Fig. 6a zeigt, nur am Ende bzw. Endpunkt 24 des ersten Bearbeitungssegmentes 16 bzw. am Anfang bzw. Startpunkt 30 des zweiten Bearbeitungssegmentes 20 fest vorgegeben. Auf dem Verbindungssegment 18 zwischen den End- und Startpunkten 24, 30 kann die Orientierung des Werkzeuges 12 demnach auf beliebige Weise interpoliert werden. Aktuelle Verfahren interpolieren oft einfach gleichmäßig mit einer konstanten Winkelschrittweite je Längeneinheit, wobei die gepunkteten Linien die jeweilige Achse 42 des Werkzeuges 12 darstellen.

Sofern jedoch am Ende bzw. Endpunkt 24 des ersten Bearbeitungssegmentes 16 und am Anfang bzw. Startpunkt 30 des zweiten Bearbeitungssegmentes 20 unterschiedlich große Vorschübe vorhanden sind, kann der resultierende Winkelschritt pro Zeiteinheit entlang dem Verbindungssegment 18 bei diesem Vorgehen variieren. Dadurch ergibt sich offensichtlich eine ungleichmäßige Bewegung des Werkzeuges 12. Beim erfindungsgemäßen Verfahren werden daher die Vorschubgeschwindigkeiten miteinbezogen. Der Winkelschritt wird beispielsweise als umgekehrt proportional zur lokalen Vorschubgeschwindigkeit berechnet. Wie in der Fig. 6b veranschaulicht ist, erfolgt bei einem hohen Vorschub nur eine geringe Winkeländerung je Längeneinheit und bei einem geringen Vorschub eine größere Winkeländerung.

Vorzugsweise wird das Werkzeug 10 auf der Führungsbahn 12 kollisionsfrei bewegt.

Schließlich ist es möglich, dass das Werkzeug 10 bei dem erfindungsgemäßen Verfahren auf einer Führungsbahn 12, die als tangentenstetige oder krümmungsstetige Kurve ausgebildet ist, zu bewegen.

Die Erfindung ist nicht auf die dargestellten Ausführungsformen des erfindungsgemäßen Verfahrens entsprechend den Fig. 1a bis 6b beschränkt. So ist es möglich, die Ausführungsformen der erfindungsgemäßen Verfahren untereinander bzw. miteinander beliebig zu kombinieren. Auch ist die Erfindung von der Art der Bearbeitung, d.h. insbesondere von einer Bohrungs- oder Flächenbearbeitung, gänzlich unabhängig. Das Werkzeug 12 kann ohne Einschränkung der Erfindung beispielsweise als Fräswerkzeug bzw. Fräser, Bohrwerkzeug bzw. Bohrer oder Laserkopf ausgebildet sein. Schließlich kann das Verbindungssegment 18 bei dem erfindungsgemäßen Verfahren in dessen Form gleichwirkend durch den Vorschub F1 des Werkzeuges 12 am Anfang bzw. Startpunkt des Verbindungssegmentes 18, der mit dem Endpunkt 24 des ersten Bearbeitungssegmentes 16 zusammenfällt, und den Vorschub F2 des Werkzeuges 12 am Ende bzw. Endpunkt des Verbindungssegmentes 18, der mit dem Startpunkt 30 des zweiten Bearbeitungssegmentes 20 zusammenfällt, bestimmt werden, sowie folglich in Richtung des größeren Vorschubs F1, F2 des Verbindungssegmentes 18 an dessen Anfang bzw. dessen Ende deformiert werden.

## Patentansprüche

1. Verfahren zur Bearbeitung eines Rohteils (10) mittels eines Werkzeuges (12) zur Herstellung eines Fertigteils, wobei das Werkzeug (12) während der Bearbeitung auf einer Führungsbahn (14) mit wenigstens drei aufeinanderfolgenden Bahnsegmenten (16, 18, 20; 16-1, 18-1, 20-1; 16-2, 18-2, 20-2; 18') in Form von zwei Bearbeitungssegmenten (16, 20; 16-1, 20-1; 16-2, 20-2) und einem die zwei Bearbeitungssegmente (16, 20; 16-1, 20-1; 16-2, 20-2) miteinander verbindenden Verbindungssegment (18; 18-1; 18-2; 18') bewegt wird, **dadurch gekennzeichnet, dass** das die zwei Bearbeitungssegmente (16, 20; 16-1, 20-1; 16-2, 20-2) miteinander verbindende Verbindungssegment (18; 18-1; 18-2; 18') der Bahnsegmente (16, 18, 20; 16-1, 18-1, 20-1; 16-2, 18-2, 20-2; 18') in dessen Form durch den Vorschub (F1) des Werkzeuges (12) am Ende (24) des ersten Bearbeitungssegmentes (16) und den Vorschub (F2) des Werkzeuges (12) am Anfang (30) des zweiten Bearbeitungssegmentes (20) bestimmt wird, wobei das die zwei Bearbeitungssegmente (16, 20; 16-1, 20-1; 16-2, 20-2) miteinander verbindende Verbindungssegment (18; 18-1; 18-2; 18') der Bahnsegmente (16, 18, 20; 16-1, 18-1, 20-1; 16-2, 18-2, 20-2; 18') in Richtung des größeren Vorschubs (F1, F2) am Ende (24) oder am Anfang (30) der zwei Bearbeitungssegmente (16, 20) deformiert wird.

2. Verfahren nach Anspruch 1, **dadurch gekennzeichnet, dass** das die zwei Bearbeitungssegmente (16, 20; 16-1, 20-1; 16-2, 20-2) miteinander verbindende Verbindungssegment (18; 18-1; 18-2; 18') der Bahnsegmente (16, 18, 20; 16-1, 18-1, 20-1; 16-2, 18-2, 20-2; 18') entsprechend einem Verhältnis aus dem Vorschub (F1) des Werkzeuges (12) am Ende (24) des ersten Bearbeitungssegmentes (16) zu dem Vorschub (F2) des Werkzeuges (12) am Anfang (30) des zweiten Bearbeitungssegmentes (20) deformiert wird.

3. Verfahren nach Anspruch 1 oder 2, **dadurch gekennzeichnet, dass** das die zwei Bearbeitungssegmente (16, 20; 16-1, 20-1; 16-2, 20-2) miteinander verbindende Verbindungssegment (18; 18-1; 18-2; 18') der Bahnsegmente (16, 18, 20; 16-1, 18-1, 20-1; 16-2, 18-2, 20-2; 18') bei einem Verhältnis des Vorschubs (F1/F2) des Werkzeuges (12) größer 1 zum ersten Bearbeitungssegment (16) und bei einem Verhältnis des Vorschubs (F1/F2) des Werkzeuges (12) kleiner 1 zum zweiten Bearbeitungssegment (20) hin deformiert wird.

4. Verfahren nach einem der Ansprüche 1 bis 3, **dadurch gekennzeichnet, dass** die Höhe oder Länge des Verbindungssegmentes (18; 18-1; 18-2; 18') der Bahnsegmente (16, 18, 20; 16-1, 18-1, 20-1; 16-2, 18-2, 20-2; 18') durch den Betrag des Vorschubs (F1, F2) des Werkzeuges (12) am Ende (24) des ersten Bearbeitungssegmentes (16) und/oder am Anfang (30) des zweiten Bearbeitungssegmentes (20) bestimmt wird.

5. Verfahren nach einem der Ansprüche 1 bis 4, **dadurch gekennzeichnet, dass** das Verbindungssegment (18; 18-1; 18-2; 18') der Bahnsegmente (16, 18, 20; 16-1, 18-1, 20-1; 16-2, 18-2, 20-2; 18') an ein jeweiliges anisotropes Beschleunigungsprofil einer das Werkzeug (12) aufnehmenden Werkzeugmaschine angepasst wird.

6. Verfahren nach einem der Ansprüche 1 bis 5, **dadurch gekennzeichnet, dass** das Werkzeug (12) während der Bearbeitung auf der Führungsbahn (14) mit dem ersten Bearbeitungssegment (16) und dem zweiten Bearbeitungssegment (20) mit dem Material des Rohteils (10) in Eingriff stehend bewegt wird.

7. Verfahren nach einem der Ansprüche 1 bis 6, **dadurch gekennzeichnet, dass** das Werkzeug (12) während der Bearbeitung auf der Führungsbahn (14) mit dem Verbindungssegment (18; 18-1; 18-2; 18') zwischen dem ersten Bearbeitungssegment (16, 16-1; 16-2) und dem zweiten Bearbeitungssegment (20; 20-1; 20-2) mit dem Material des Rohteils (10) außer Eingriff oder in Eingriff stehend bewegt wird.

8. Verfahren nach einem der Ansprüche 1 bis 7, **dadurch gekennzeichnet, dass** das Werkzeug (12) auf der Führungsbahn (14) im Bereich des Verbindungssegmentes (18; 18-1; 18-2; 18') der Bahnsegmente (16, 18, 20; 16-1, 18-1, 20-1; 16-2, 18-2, 20-2; 18') mit einer gleichmäßigen und/oder einer vorschubabhängigen Interpolation der Werkzeugorientierung bewegt wird.

9. Verfahren nach einem der Ansprüche 1 bis 8, **dadurch gekennzeichnet, dass** das Werkzeug (12) auf der Führungsbahn (14) mit wenigstens zwei Bearbeitungssegmenten (16, 20; 16-1, 20-1; 16-2, 20-2) mit abwechselnd umkehrender Laufrichtung bewegt wird.

10. Verfahren nach einem der Ansprüche 1 bis 9, **dadurch gekennzeichnet, dass** das Werkzeug (12) auf einer Führungsbahn (14), die als tangentenstetige oder krümmungsstetige Kurve ausgebildet ist, bewegt wird.

11. Verfahren nach einem der Ansprüche 1 bis 10, **dadurch gekennzeichnet, dass** das Werkzeug (12) auf der Führungsbahn (14) kollisionsfrei bewegt wird.

12. Verfahren nach einem der Ansprüche 1 bis 11, **dadurch gekennzeichnet, dass** das Werkzeug (12) als Fräswerkzeug, Bohrwerkzeug oder Laserkopf ausgebildet wird.

## Claims

1. Method for machining a blank (10) by means of a tool (12) for producing a finished part, wherein the tool (12) is moved during the machining on a guide path (14) comprising at least three successive path segments (16, 18, 20; 16-1, 18-1, 20-1; 16-2, 18-2, 20-2; 18') in the form of two machining segments (16, 20; 16-1, 20-1; 16-2, 20-2) and one connecting segment (18; 18-1; 18-2; 18'), which connects the two machining segments (16, 20; 16-1, 20-1; 16-2, 20-2) to one another, **characterized in that** the connecting segment (18; 18-1; 18-2; 18') of the path segments (16, 18, 20; 16-1, 18-1, 20-1; 16-2, 18-2, 20-2; 18'), which connecting segment connects the two machining segments (16, 20; 16-1, 20-1; 16-2, 20-2) with one another, is determined in terms of its shape by the forward feed (F1) of the tool (12) at the end (24) of the first machining segment (16) and by the forward feed (F2) of the tool (12) at the start (30) of the second machining segment (20), wherein the connecting segment (18; 18-1; 18-2; 18') of the path segments (16, 18, 20; 16-1, 18-1, 20-1; 16-2, 18-2, 20-2; 18'), which connects the two machining segments (16, 20; 16-1, 20-1; 16-2, 20-2) with one another, is deformed towards the higher forward feed (F1, F2) at the end (24) or at the start (30) of the two machining segments (16, 20).

2. Method according to claim 1, **characterized in that** the connecting segment (18; 18-1; 18-2; 18') of the path segments (16, 18, 20; 16-1, 18-1, 20-1; 16-2, 18-2, 20-2; 18'), which connects the two machining segments (16, 20; 16-1, 20-1; 16-2, 20-2) with one another, is deformed according to a ratio of the forward feed (F1) of the tool (12) at the end (24) of the first machining segment (16) to the forward feed (F2) of the tool (12) at the start (30) of the second machining segment (20).

3. Method according to claim 1 or 2, **characterized in that** the connecting segment (18; 18-1; 18-2; 18') of the path segments (16, 18, 20; 16-1, 18-1, 20-1; 16-2, 18-2, 20-2; 18'), which connects the two machining segments (16, 20; 16-1, 20-1; 16-2, 20-2) with one another, is deformed towards the first machining segment (16), if the ratio of the forward feed (F1/F2) of the tool (12) is larger than 1, and is deformed towards the second machining segment (20), if the ratio of the forward feed (F1/F2) is smaller than 1.

4. Method according to one of the claims 1 to 3, **characterized in that** the height or length of the connecting segment (18; 18-1; 18-2; 18') of the path segments (16, 18, 20; 16-1, 18-1, 20-1; 16-2, 18-2, 20-2; 18') is determined by the amount of the forward feed (F1, F2) of the tool (12) at the end (24) of the first machining segment (16) and/or at the start (30) of the second machining segment (20).

5. Method according to one of the claims 1 to 4, **characterized in that** the connecting segment (18; 18-1; 18-2; 18') of the path segments (16, 18, 20; 16-1, 18-1, 20-1; 16-2, 18-2, 20-2; 18') is adapted to a corresponding anisotropic acceleration profile of a machine tool carrying the tool (12).

6. Method according to one of the claims 1 to 5, **characterized in that** the tool (12) is moved during the machining on the guide path (14) with the first machining segment (16) and the second machining segment (20) in engagement with the material of the blank (10).

7. Method according to one of the claims 1 to 6, **characterized in that** the tool (12) is moved during the machining on the guide path (14) with the connecting segment (18; 18-1; 18-2; 18') between the first machining segment (16; 16-1; 16-2) and the second machining segment (20; 20-1; 20-2) without engagement or in engagement with the material of the blank (10).

8. Method according to one of the claims 1 to 7, **characterized in that** the tool (12) is moved on the guide path (14) in the area of the connecting segment (18; 18-1; 18-2; 18') of the path segments (16, 18, 20; 16-1, 18-1, 20-1; 16-2, 18-2, 20-2; 18') with an evenly interpolated and/or forward feed-dependently interpolated orientation of the tool (12).

9. Method according to one of the claims 1 to 8, **characterized in that** the tool (12) is moved on the guide path (14) having at least two machining segments (16, 20; 16-1, 20-1; 16-2, 20-2) having alternating advance directions.

10. Method according to one of the claims 1 to 9, **characterized in that** the tool (12) is moved on a guide path (14) that is embodied in the form of a tangent-continuous or curvature-continuous curve.

11. Method according to one of the claims 1 to 10, **characterized in that** the tool (12) is moved on the guide path (14) in a collision-free manner.

12. Method according to one of the claims 1 to 11, **characterized in that** the tool (12) is a milling tool, a drilling tool or a laser tool.

## Revendications

1. Procédé pour usiner une ébauche (10) au moyen d'un outil (12) pour réaliser une pièce finie, dans lequel, pendant l'usinage, on déplace l'outil (12) sur une voie de guidage (14) présentant au moins trois segments de voie successifs (16, 18, 20; 16-1, 18-1, 20-1; 16-2, 18-2, 20-2; 18') sous la forme de deux segments d'usinage (16, 20; 16-1, 20-1; 16-2, 20-2) et d'un segment de liaison (18; 18-1; 18-2; 18') qui relie les deux segments d'usinage (16, 20; 16-1, 20-1; 16-2, 20-2) l'un à l'autre, **caractérisé en ce que** le segment de liaison (18; 18-1; 18-2; 18') qui relie les deux segments d'usinage (16, 20; 16-1, 20-1; 16-2, 20-2) l'un à l'autre des segments de voie (16, 18, 20; 16-1, 18-1, 20-1; 16-2, 18-2, 20-2; 18') est définie, quant à sa forme, par l'avance (F1) de l'outil (12) à l'extrémité (24) du premier segment d'usinage (16) et par l'avance (F2) de l'outil (12) au début (30) du second segment d'usinage (20), dans lequel le segment de liaison (18; 18-1; 18-2; 18') qui relie les deux segments d'usinage (16, 20; 16-1, 20-1; 16-2, 20-2) l'un à l'autre des segments de voie (16, 18, 20; 16-1, 18-1, 20-1; 16-2, 18-2, 20-2; 18') est déformé en direction de l'avance plus importante (F1, F2) à l'extrémité (24) ou au début (30) des deux segments d'usinage (16, 20).

2. Procédé selon la revendication 1, **caractérisé en ce que** le segment de liaison (18; 18-1; 18-2; 18') qui relie les deux segments d'usinage (16, 20; 16-1, 20-1; 16-2, 20-2) l'un à l'autre des segments de voie (16, 18, 20; 16-1, 18-1, 20-1; 16-2, 18-2, 20-2; 18') est déformé en fonction d'un rapport entre l'avance (F1) de l'outil (12) à l'extrémité (24) du premier segment d'usinage (16) et l'avance (F2) de l'outil (12) au début (30) du second segment d'usinage (20).

3. Procédé selon la revendication 1 ou 2, **caractérisé en ce que** le segment de liaison (18; 18-1; 18-2; 18') qui relie les deux segments d'usinage (16, 20; 16-1, 20-1; 16-2, 20-2) l'un à l'autre des segments de voie (16, 18, 20; 16-1, 18-1, 20-1; 16-2, 18-2, 20-2; 18') est déformé vers le premier segment d'usinage (16) lors d'un rapport de l'avance (F1/F2) de l'outil (12) supérieur à 1, et il est déformé vers le second segment d'usinage (20) lors d'un rapport de l'avance (F1/F2) de l'outil (12) inférieur à 1.

4. Procédé selon l'une des revendications 1 à 3, **caractérisé en ce que** la hauteur ou la longueur du segment de liaison (18; 18-1; 18-2; 18') des segments de voie (16, 18, 20; 16-1, 18-1, 20-1; 16-2, 18-2, 20-2; 18') est définie par le montant de l'avance (F1, F2) de l'outil (12) à l'extrémité (24) du premier segment d'usinage (16) et/ou au début (30) du second segment d'usinage (20).

5. Procédé selon l'une des revendications 1 à 4, **caractérisé en ce que** le segment de liaison (18; 18-1; 18-2; 18') des segments de voie (16, 18, 20; 16-1, 18-1, 20-1; 16-2, 18-2, 20-2; 18') est adapté à un profil d'accélération anisotrope respectif d'une machine-outil recevant l'outil (12).

6. Procédé selon l'une des revendications 1 à 5, **caractérisé en ce que**, pendant l'usinage, l'outil (12) est déplacé sur la voie de guidage (14) avec le premier segment d'usinage (16) et avec le second segment d'usinage (20) en étant en engagement avec le matériau de l'ébauche (10).

7. Procédé selon l'une des revendications 1 à 6, **caractérisé en ce que**, pendant l'usinage, l'outil (12) est déplacé sur la voie de guidage (14) avec le segment de liaison (18; 18-1; 18-2; 18') entre le premier segment d'usinage (16, 16-1; 16-2) et le second segment d'usinage (20; 20-1; 20-2) en étant en engagement ou non avec le matériau de l'ébauche (10) .

8. Procédé selon l'une des revendications 1 à 7, **caractérisé en ce que** l'outil (12) est déplacé sur la voie de guidage (14) dans la zone du segment de liaison (18; 18-1; 18-2; 18') des segments de voie (16, 18, 20; 16-1, 18-1, 20-1; 16-2, 18-2, 20-2; 18') avec une interpolation, uniforme et/ou dépendante de l'avance, de l'orientation de l'outil.

9. Procédé selon l'une des revendications 1 à 8, **caractérisé en ce que** l'outil (12) est déplacé sur la voie de guidage (14) avec au moins deux segments d'usinage (16, 20; 16-1, 20-1; 16-2, 20-2) avec une direction de déplacement inversée en alternance.

10. Procédé selon l'une des revendications 1 à 9, **caractérisé en ce que** l'outil (12) est déplacé sur une voie de guidage (14) qui est réalisée sous la forme d'une courbe à tangente constante ou à courbure constante.

11. Procédé selon l'une des revendications 1 à 10, **caractérisé en ce que** l'outil (12) est déplacé sans collision sur la voie de guidage (14).

12. Procédé selon l'une des revendications 1 à 11, **caractérisé en ce que** l'outil (12) est déplacé sous forme d'outil de fraisage, d'outil de perçage ou de tête laser.
